# EUROPÄISCHE PATENTSCHRIFT

(11) **EP 0 943 830 B1**
(45) Veröffentlichungstag und Bekanntmachung des Hinweises auf die Patenterteilung: **13.08.2003**
(21) Anmeldenummer: 99104912.3
(22) Anmeldetag: 12.03.1999
(51) Int. Cl.: F16D 33/12

(54) **Hydrodynamische Kupplung**
Hydrodynamic coupling
Accouplement hydrodynamique

(30) Priorität: 14.03.1998 DE 19811252
(43) Veröffentlichungstag der Anmeldung: 22.09.1999
(73) Patentinhaber: Voith Turbo GmbH & Co. KG, 89522 Heidenheim (DE)
(72) Erfinder: Hoffeld, Harald, 74564 Crailsheim (DE); Höller, Heinz, 74564 Crailsheim (DE); Lubik, Konrad, 74564 Crailsheim (DE)
(74) Vertreter: Dr. Weitzel & Partner

(56) Entgegenhaltungen:
- EP-A- 0 512 405
- BE-A- 623 071
- DE-A- 1 425 394
- DE-A- 2 202 927
- DE-A- 4 311 350
- US-A- 4 581 892

## Beschreibung

Die Erfindung betrifft eine hydrodynamische Kupplung. Solche Kupplungen umfassen als wesentliche Bestandteile ein Pumpenrad und ein Turbinenrad, die miteinander einen Arbeitsraum bilden, der eine Flüssigkeit enthält. Als Flüssigkeit kommen beispielsweise Öl oder Wasser in Betracht.

Eine solche Kupplung dient zur Kraftübertragung von einem Antriebsmotor zu einer Arbeitsmaschine. Dabei erleichtert die Kupplung das Anlaufen des Antriebsmotors aus dem Stillstand. Während der Anlaufphase überträgt sie nämlich ein verhältnismäßig geringes Drehmoment. Mit zunehmender Drehzahl bildet und stabilisiert sich ein Arbeitskreislauf zwischen Pumpenrad und Turbinenrad, so daß die Kupplung schließlich das volle Drehmoment des Motors auf die Arbeitsmaschine überträgt. Eine solche Pumpe ist beispielsweise in DE 14 25 394 (GB 994 256) beschrieben.

Es ist ferner bekannt, die Kupplung mit einer Verzögerungskammer auszurüsten. Diese Kammer steht mit dem Pumpenrad in leitender Verbindung, so daß ein Flüssigkeitsaustausch zwischen Arbeitsraum einerseits und Verzögerungskammer andererseits herrscht. Siehe EP 0 512 405 B1 oder gattungsgemäße BE-A-0 623 071. Dabei bestehen zwischen dem Arbeitsraum und der Verzögerungskammer zwei leitende Verbindungen, eine radial äußere und eine radial innere. Beginnt der Antriebsmotor zu laufen und läuft die Pumpe demgemäß ebenfalls um, so folgt die Turbine dem Umlauf zunächst nur sehr schleppend. Das Arbeitsmedium befindet sich nämlich vorwiegend nur in der Verzögerungskammer. Infolge des Umlaufes der Pumpe wird es durch Fliehkraft aus der Verzögerungskammer durch die radial äußere Bohrung in den Arbeitsraum gespritzt, wo sich ein hydrodynamischer Kreislauf des Arbeitsmediums zwischen Pumpenrad und Turbinenrad aufbaut. Nach dem Hochlaufen des Pumpenrades wird bei großen Drehzahldifferenzen die Füllung im Arbeitsraum konstant gehalten, da über die Öffnung, die radial innen liegt (bei ausreichender Bespülung) alles Betriebsmedium zurückgefordert werden kann.

Beim Betrieb solcher Kupplungen hat sich gezeigt, daß das durch die Kupplung übertragene Moment zu einem bestimmten Zeitpunkt während der Anfahrphase sprungartig ansteigt. Dies bedeutet eine stoßartige Belastung der gekoppelten Maschinen, was unerwünscht ist. Die Ursachen dieser Erscheinung sind unbekannt.

Der Erfindung liegt die Aufgabe zugrunde, eine hydrodynamische Kupplung mit einer Verzögerungskammer derart zu gestalten, daß sprungartige Änderungen des Motormomentes während der Anfahrphase vermieden werden.

Diese Aufgabe wird durch die Merkmale von Anspruch 1 gelöst.

Die Erfinder haben erkannt, daß während der Anfahrphase das Überströmen des Arbeitsmediums aus der Verzögerungskammer ab Erreichen eines bestimmten Füllungsgrades des Arbeitsraumes sprungartig vor sich geht. Die Erfinder haben ferner die Lösung des Problems erkannt. Demgemäß ist nämlich die radial innere Bohrung etwa auf denselben Radius zu legen, wie der Boden, d.h. die radial innere Wand der Verzögerungskammer. Damit wird eine stoßartige Belastung der gekoppelten Maschine vermieden. Außerdem ermöglicht es die Erfindung, die Verzögerungskammer besonders groß zu machen, weil es vorteilhaft ist.

Ein weiteres Merkmal der Erfindung besteht darin, den Rückführkanal stufig auszuführen. Dazu wird eine Ringscheibe vorgesehen, die am Pumpenrad anliegt und an die Verzögerungskammer angrenzt. Die Rückführöffnung umfaßt dann einen Kanal durch die Ringscheibe sowie eine Bohrung durch die Wandung des Pumpenrades. Die verzögerungsseitige Öffnung des Kanales in der Ringscheibe ist auf einem kleineren Radius als die pumpenseitige Öffnung des Ringkanales vorgeshen. Damit wird eine Geometrie geschaffen, welche es ermöglicht, daß der Staudruck, der sich der Strömung entgegenstellt, minimal ist.

Die Erfindung ist anhand der Zeichnung näher erläutert. Darin ist im einzelnen folgendes dargestellt:
- Fig. 1: zeigt in einem Axialschnitt eine hydrodynamische Kupplung, jedoch noch ohne die erfindungsgemäß eingebrachte Ringscheibe.
- Fig. 2: zeigt eine weitere Ausführungsform mit einer Ringscheibe, wiederum in einem Axialschnitt und in einer Teilansicht, allerdings ist nicht die stufung des kanals durch die Wandung des Pumpenrads und Ringscheibe gezeigt.
- Fig. 3: zeigt eine Ausführungsform der Erfindung im Axialschnitt und in einer Teilansicht.

Die Figuren 4 und 5 zeigen im Axialschnitt eine vorbekannte hydrodynamische Kupplung, jedoch mit einer Ringsscheibe.

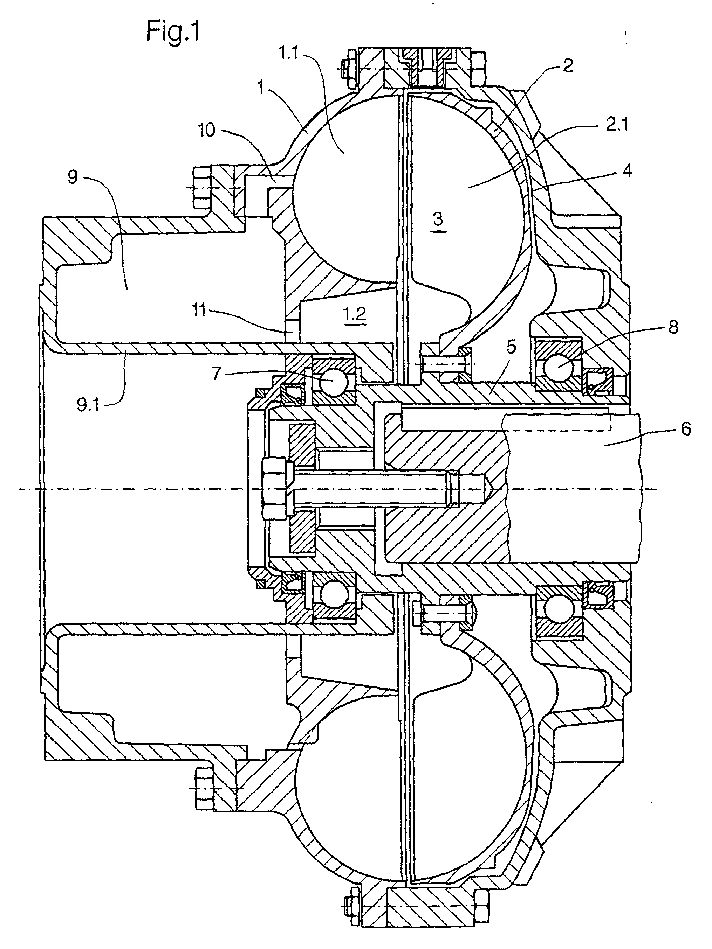

Die in Fig. 1 gezeigte hydrodynamische Kupplung ist eine Kupplung mit konstanter Füllung. Sie kann beispielsweise im Bergbau eingesetzt werden, z. B. für Rührwerke, Förderanlagen oder andere schwer anlaufende Maschinen.

Die Kupplung umfaßt ein Pumpenrad 1 (Primärschaufelrad) mit Schaufeln 1.1, ferner ein Turbinenrad 2 (Sekundärschaufelrad) mit Schaufeln 2.1. Die beiden Schaufelräder 1 und 2 bilden miteinander einen torusförmigen Arbeitsraum 3. Am Pumpenrad 1 ist eine Schale 4 befestigt. Diese umhüllt das Turbinenrad 2. Das Turbinenrad 2 ist auf einer Nabe 5 befestigt. Die Nabe ist drehfest mit einer Abtriebswelle 6 verbunden. Pumpenrad 1 und Schale 4 sind mittels Wälzlagern 7 und 8 auf der Nabe 5 gelagert.

Im radial inneren Bereich des Turbinenrades 1 befindet sich ein schaufelfreier Stauraum 1.2. An das Pumpenrad 1 ist eine Verzögerungskammer 9 angeschlossen. Diese ist über eine radial äußere und eine radial innere Öffnung mit dem Arbeitsraum 3 leitend verbunden. Die radial äußere Öffnung 10 (Füllungsöffnung) dient zum Überleiten von Arbeitsmedium aus der Verzögerungskammer 9 in den Arbeitsraum 3. Die radial innere Öffnung 11 (Rückführöffnung) läßt eine Strömung von Arbeitsmedium je nach Betriebszustand in beiden Richtungen zu, d.h. aus der Verzögerungskammer 9 in den Arbeitsraum 3 und umgekehrt.

Die Verzögerungskammer 9 weist eine radial innere Wandung 9.1 auf (Boden). Wie man sieht, befindet sich die Rückführöffnung 11 etwa auf demselben Radius wie der Boden 9.1. Mit den erfindungsgemäßen Merkmalen nach Anspruch 1 wird der oben erwähnte Füllstoß vermieden. Es findet beim Anfahren der Kupplung nach Erreichen einer bestimmten Abtriebsdrehzahl (füllungsabhängig) ein gleichmäßiges Füllen des Arbeitsraumes 3 aus der Verzögerungskammer 9 statt.

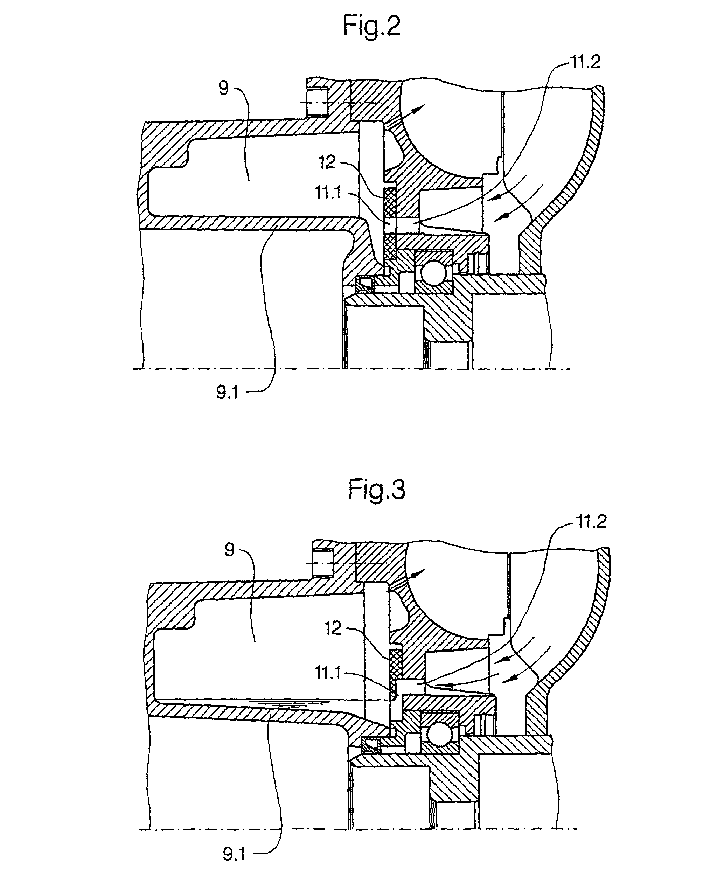

Die in Fig. 2 gezeigte Variante zeigt eine Ringscheibe 12. Die Ringscheibe 12 hat eine Dichtringfunktion. Sie weist eine Bohrung 11.1 auf. In der Wandung des Pumpenrades 1 befindet sich eine Bohrung 11.2. Die beiden Bohrungen 11.1 und 11.2 fluchten miteinander, so daß sie gemeinsam die genannte Rückführöffnung bilden. Wie man sieht, liegt auch hier die Rückführöffnung etwa auf der Höhe des Bodens 9.1 der Verzögerungskammer 9. Der Boden ist gegenüber der Ausführungsform gemäß Fig. 1 radial geringfügig nach außen verlegt. Die erfindungsgemäße Stufung des Kanals 11.1 gemäß Anspruch 1 ist nicht im Einzelnen dargestellt.

Bei der Ausführungsform gemäß Fig. 3 ist wiederum eine Ringscheibe 12 vorgesehen. Auch diese weist wiederum einen Kanal 11.1 auf, und die Wandung des Pumpenrades 1 weist wiederum eine Bohrung 11.2 auf. Die Rückführöffnung wird somit aus Kanal 11.1 und Bohrung 11.2 gebildet. Entscheidend ist auch hier wiederum, daß sich die Verzögerungskammerseitige Öffnung des Rückführkanales etwa auf demselben Radius befindet wie der Boden 9.1 der Verzögerungskammer 9. Die verzögerungsseitige Öffnung des Kanales (11.1) in der Ringscheibe (12) liegt auf einem kleineren Radius als die pumpenseitige Öffnung des Ringkanales (11.1). Der Staudruck, der sich der Strömung entgegenstellt, ist minimal. Die Rückfüllung wird nah innen umgelenkt.

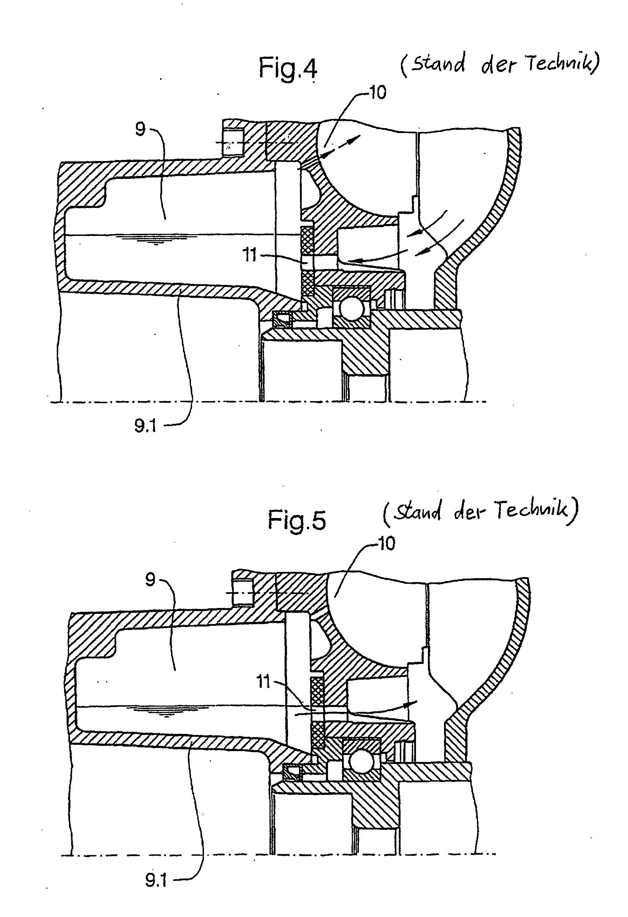

Die in den Figuren 4 und 5 gezeigte Ausführungsform zeigt folgendes: Hierbei liegt die Rückführöffnung 11 auf einem größeren Radius als der Boden 9.1 der Verzögerungskammer 9. Bei umlaufendem Motor und bei großem Schlupf gelangt eine relativ große Menge von Arbeitsmedium aus dem Arbeitsraum 3 durch die Rückführöffnung 11 in die Verzögerungskammer 9.

Bei höheren Turbinendrehzahlen hört die Rückförderwirkung durch die Rückführöffnung 11 plötzlich auf. Der Rest des in der Verzögerungskammer 9 verbleibenden Arbeitsmediums gelangt über die radial inneren Öffnungen schlagartig in den Arbeitsraum, was zu einem Füllstoß und damit zu einem Kennliniensprung führt.

## Patentansprüche

1. Hydrodynamische Kupplung, umfassend
1.1 ein Pumpenrad (1) und ein Turbinenrad (2), die miteinander einen Arbeitsraum (3) bilden;
1.2 eine Verzögerungskammer (9), die an das Pumpenrad (1) angeschlossen ist;
1.3 eine radial äußere Öffnung (10) zum Überleiten von Arbeitsmedium aus der Verzögerungskammer (9) in den Arbeitsraum (3);
1.4 eine radial innere Öffnung (11),
**gekennzeichnet durch** die folgenden Merkmale:
1.5 die Rücktühröffnung (11) liegt radial im Bereich der inneren Wand (9.1) der Verzögerungskammer (9) auf annähernd demselben Radius wie die radial innere wand (9.1),
1.6 es ist eine Ringscheibe (12) vorgesehen, die am Pumpenrad (1) anliegt und an die Verzögerungskammer (9) angrenzt;
1.7 die Rückführöffnung (11) umfaßt einen Kanal (11.1) **durch** die Ringscheibe (12) sowie eine Bohrung (11.2) **durch** die Wandung des Pumpenrades (1);
1.8 die verzögerungsseitige Öffnung des Kanales (11.1) in der Ringscheibe (12) liegt auf einem kleineren Radius als die pumpenseitige Öffnung des Ringkanales (11.1).

2. Hydrodynamische Kupplung nach Anspruch 1, **dadurch gekennzeichnet, daß** das Pumpenrad (1) radial innerhalb des Arbeitsraumes (3) einen Stauraum (1.2) aufweist.

## Claims

1. A hydrodynamic coupling, comprising
1.1 a pump wheel (1) and a turbine wheel (2) which jointly form a working chamber (3);
1.2 a retardation chamber (9) which is connected to the pump wheel (1);
1.3 a radially outside opening (10) for transferring the working medium from the retardation chamber (9) to the working chamber (3);
1.4 a radially inner opening (11),
**characterized by** the following features:
1.5 a recirculation opening (11) is situated radially in the region of the inner wall (9.1) of the retardation chamber (9) on approximately the same radius as the radially inner wall (9.1),
1.6 a ring wheel (12) is provided which rests on the pump wheel (1) and borders the retardation chamber (9);
1.7 the recirculation opening (11) comprises a conduit (11.1) through the ring wheel (12) and a bore (11.2) through the wall of the pump wheel (1);
1.8 the retardation-side opening of the conduit (11.1) in the ring wheel (12) is situated on a smaller radius than the pump-side opening of the ring conduit (11.1).

2. A hydrodynamic coupling as claimed in claim 1, **characterized in that** the pump wheel (1) is provided with a retaining space (1.2) radially within the working chamber (3).

## Revendications

1. Accouplement hydrodynamique comportant
1.1 une roue de pompe (1) et une roue de turbine (2) formant à elles deux un espace de travail (3) ;
1.2 une chambre de retardement (9) raccordée à la roue de pompe (1) ;
1.3 une ouverture radiale externe (10) pour faire passer le fluide moteur de la chambre de retardement (9) dans l'espace de travail (3) ;
1.4 une ouverture radiale interne (11),
**caractérisée par** les dispositions suivantes :
1.5 l'ouverture de recirculation (11) est située radialement dans la région de la paroi interne (9.1) de la chambre de retardement (9) sur à peu près le même rayon,
1.6 un disque annulaire (12) qui est en appui contre la roue de pompe (1) et contigu à la chambre de retardement (9) est prévu ;
1.7 l'ouverture de recirculation (11) comporte un canal (11.1) qui traverse le disque annulaire (12) et un alésage (11.2) pratiqué dans la paroi de la roue de pompe (1) ;
1.8 l'ouverture du canal (11.1) dans le disque annulaire (12) située du côté du retardement est placée sur un plus petit rayon que l'ouverture du canal annulaire (11.1) située du côté de la pompe.

2. Accouplement hydraulique selon la revendication 1, **caractérisé en ce que** la roue de pompe (1) comporte un espace de retenue (1.2) situé radialement à l'intérieur de l'espace de travail (3).
